# EUROPEAN PATENT SPECIFICATION

(11) **EP 4 306 423 B1**
(45) Date of publication and mention of the grant of the patent: **29.10.2025**
(21) Application number: 23185418.3
(22) Date of filing: 13.07.2023
(51) Int. Cl.: B64D 27/04, B64D 35/02, F01D 15/12, F02C 5/00, F02C 7/36

(54) **AIRCRAFT PROPULSION SYSTEM WITH INTERMITTENT COMBUSTION ENGINE(S)**
FLUGZEUGANTRIEBSSYSTEM MIT INTERMITTIERENDEM VERBRENNUNGSMOTOR(EN)
SYSTÈME DE PROPULSION D'AÉRONEF AVEC MOTEUR(S) À COMBUSTION INTERMITTENTE

(30) Priority: 15.07.2022 US 202217866063
(43) Date of publication of application: 17.01.2024
(73) Proprietor: PRATT & WHITNEY CANADA CORP., Longueuil, Québec J4G 1A1 (CA)
(72) Inventor: FREER, Richard, (01BE5) Longueuil, J4G 1A1 (CA)
(74) Representative: Dehns

(56) References cited:
- EP-B1- 3 847 043
- DE-A1- 102019 208 353
- US-A- 5 890 441

## Description

### TECHNICAL FIELD

This invention relates generally to an aircraft and, more particularly, to a propulsion system for the aircraft.

### BACKGROUND INFORMATION

An aircraft such as a business jet may fly at relatively high altitudes to reduce aircraft drag and may fly at relatively fast speeds to decrease flight time. Engine power and engine efficiency at high altitudes therefore is a relatively important factor when selecting a propulsion system engine for a business jet. A typical business jet includes one or more small gas turbine engines for generating aircraft propulsion. While such small gas turbine engines have various benefits, there is still room in the art for improvement. There is a need in the art, in particular, for more cost effective and/or fuel efficient propulsion system configurations for aircraft such as a business jet.

DE 102019208353 A1 relates to an aircraft and a method for operating the aircraft.

US 5890441 A relates to a horizontal and vertical take-off and landing unmanned aerial vehicle.

EP 3847043 B1 relates to a land and aerial transportation vehicle, a powertrain for the vehicle, and an axle assembly for the vehicle.

### SUMMARY

According to an aspect of the present invention, an aircraft system is provided as claimed in claim 1.

Some embodiments of the invention are claimed in the dependent claims.

The foregoing features and the operation of the invention will become more apparent in light of the following description and the accompanying drawings.

### BRIEF DESCRIPTION OF THE DRAWINGS

FIG. 1 is a perspective illustration of an aircraft.
FIG. 2 is a schematic illustration of an aft end portion of the aircraft configured with a propulsion system.
FIG. 3 is a schematic illustration of an aircraft powerplant coupled to a transmission, where the aircraft powerplant is configured as a turbo-compounded intermittent combustion engine.
FIG. 4 is a schematic illustration of the aircraft powerplant coupled to the transmission, where the aircraft powerplant is configured as a turbocharged intermittent combustion engine.
FIGS. 5A and 5B are sectional schematic illustrations of various drivetrains coupling a plurality of aircraft propulsors with the aircraft powerplant.
FIG. 6 is a schematic illustration of a compliant coupling between two driveshafts.
FIG. 7 is a schematic illustration of the aft end portion of the aircraft configured with additional aircraft propulsors.
FIG. 8 is a schematic illustration of the aft end portion of the aircraft configured with open rotor propulsors.
FIG. 9 is a schematic illustration of the aft end portion of the aircraft configured with a plurality of the aircraft powerplants, where each aircraft powerplant powers its own aircraft propulsors.

### DETAILED DESCRIPTION

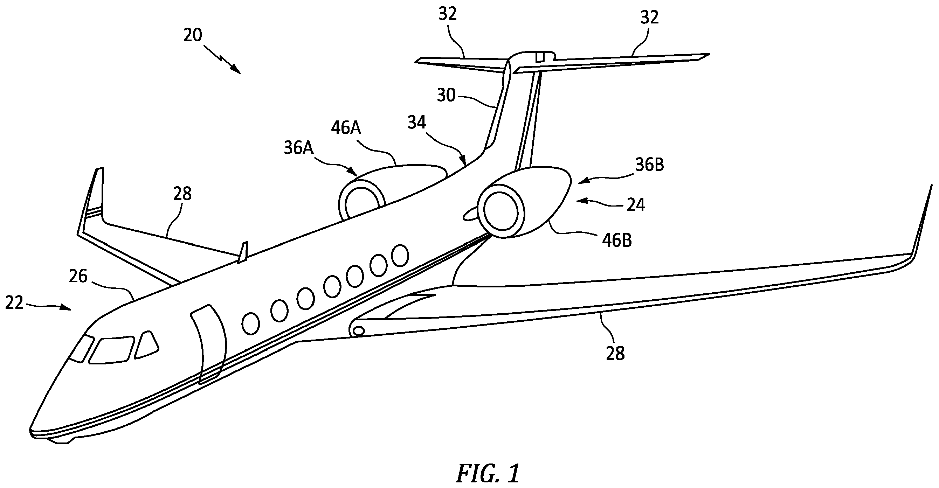

FIG. 1 illustrates an aircraft 20 configured as an airplane such as, but not limited to, a business jet. This aircraft 20 includes an aircraft airframe 22 and an aircraft propulsion system 24. The airframe 22 of FIG. 1 includes an aircraft fuselage 26, a plurality of aircraft wings 28, an aircraft vertical stabilizer 30 and a plurality of aircraft horizontal stabilizers 32.

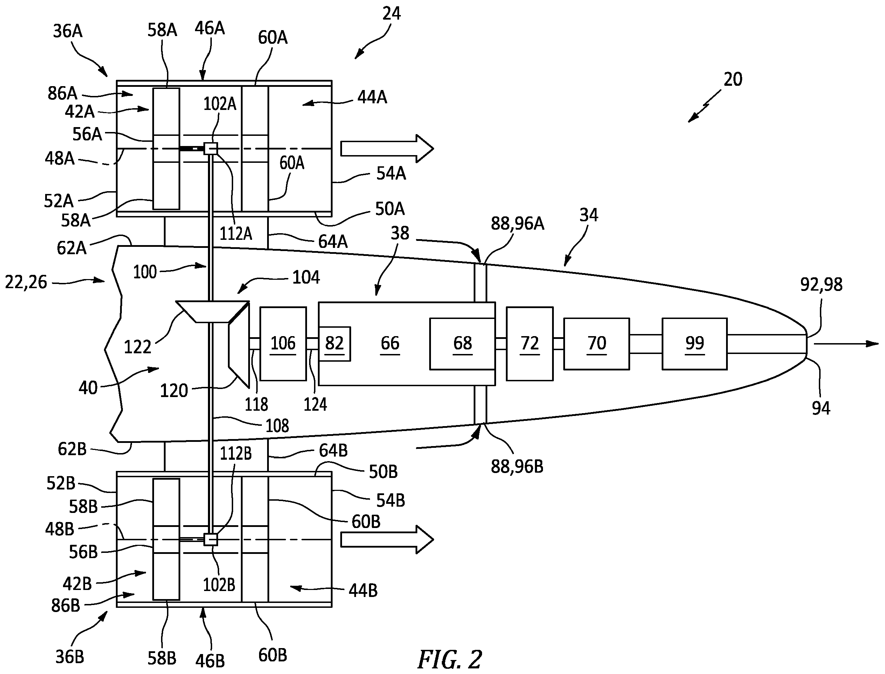

The propulsion system 24 is mounted with the airframe 22 and configured to generate (e.g., horizontal) thrust for propelling the aircraft 20 forward during forward aircraft flight. The propulsion system 24 may be located at an aft end region 34 of the fuselage 26 near the vertical stabilizer 30; however, the present disclosure is not limited to such an exemplary aircraft propulsion system location. Referring to FIG. 2, the propulsion system 24 includes at leat two aircraft propulsors 36 (e.g., 36A and 36B), an aircraft powerplant 38 and a propulsor drivetrain 40 for transferring mechanical power from the powerplant 38 to the aircraft propulsors 36.

Each of the aircraft propulsors 36A, 36B is configured as a discrete propulsion unit; e.g., a module, pod, etc. Each of the aircraft propulsors 36A, 36B of FIG. 2, includes at least (or only) one bladed propulsor rotor 42 (e.g., 42A, 42B), at least one (or only one) vane array 44 (e.g., 44A, 44B) and a propulsor housing 46 (e.g., 46A, 46B), which propulsor housing 46 may include a propulsor case and a propulsor nacelle.

Each propulsor rotor 42A, 42B is rotatable about a respective axis 48 (e.g., 48A, 48B) of the aircraft propulsor 36A, 36B. Each propulsor rotor 42A, 42B of FIG. 2 is configured as a ducted rotor; e.g., a fan rotor. Each propulsor rotor 42A, 42B of FIG. 2, more particularly, is arranged within an internal flow duct 50 (e.g., 50A, 50B) of the propulsor housing 46A, 46B. This flow duct 50A, 50B extends longitudinally (e.g., axially along the respective propulsor axis 48A, 48B) through the propulsor housing 46A, 46B between and to an inlet 52 (e.g., 52A, 52B) to the aircraft propulsor 36A, 36B and an exhaust 54 (e.g., 54A, 54B) from the aircraft propulsor 36A, 36B. Each propulsor rotor 42A, 42B includes a rotor disk 56 (e.g., 56A, 56B) and a plurality of rotor blades 58 (e.g., 58A, 58B); e.g., fan blades. The rotor blades 58 are distributed circumferentially about the respective rotor disk 56 in an annular array. Each of the rotor blades 58 is connected to the respective rotor disk 56. Each of the rotor blades 58, for example, may be formed integral with or mechanically fastened, welded, brazed, adhered and/or otherwise attached to the respective rotor disk 56. The rotor blades 58 may be stationary rotor blades. Alternatively, one or more or all of the rotor blades 58 of the respective propulsor rotor 42 may be variable pitch rotor blades.

Each vane array 44A, 44B may be disposed aft and downstream of the respective propulsor rotor 42A, 42B of the same aircraft propulsor 36A, 36B. Each vane array 44A, 44B of FIG. 2 is also arranged within the internal flow duct 50A, 50B of the propulsor housing 46A, 46B. Each vane array 44A, 44B includes a plurality of stator vanes 60 (e.g., 60A, 60B); e.g., fan exit guide vanes, turning vanes, etc. The stator vanes 60A, 60B are distributed circumferentially about the respective propulsor axis 48A, 48B in an annular array. The stator vanes 60 may be stationary stator vanes. Alternatively, one or more or all of the stator vanes 60 within the respective vane array 44 may be variable vanes.

Each of the aircraft propulsors 36 is arranged outside of the airframe 22 and its fuselage 26. The first aircraft propulsor 36A of FIG. 2, for example, is located on and mounted to a lateral first side 62A of the fuselage 26 by a first pylon 64A. The second aircraft propulsor 36B of FIG. 2 is located on and mounted to a lateral second side 62B of the fuselage 26 by a second pylon 64B, which second side 62B is laterally opposite the first side 62A. With this arrangement, the airframe 22 and its fuselage 26 are located laterally between the first aircraft propulsor 36A and the second aircraft propulsor 36B.

The aircraft powerplant 38 is an intermittent combustion engine 66, which may also be referred to as an intermittent internal combustion (IC) engine. The term "intermittent combustion engine" may describe an internal combustion engine in which a mixture of fuel and air is intermittently (e.g., periodically) detonated within the engine. Examples of the intermittent combustion engine 66 include, but are not limited to, a reciprocating piston engine (e.g., an inline (I) engine, a V-engine, a W-engine, etc.), a rotary engine (e.g., a Wankel engine), a rotating detonation engine and a pulse detonation engine. By contrast, the term "continuous combustion engine" may describe an internal combustion engine in which a mixture of fuel and air is continuously (e.g., steadily) detonated. An example of a continuous combustion engine is a gas turbine engine. While continuous combustion engines have various benefits, the intermittent combustion engine 66 may be less expensive to manufacture and service than a comparable continuous combustion gas turbine engine. The intermittent combustion engine 66 may also or alternatively be more fuel efficient than a comparable continuous combustion gas turbine engine.

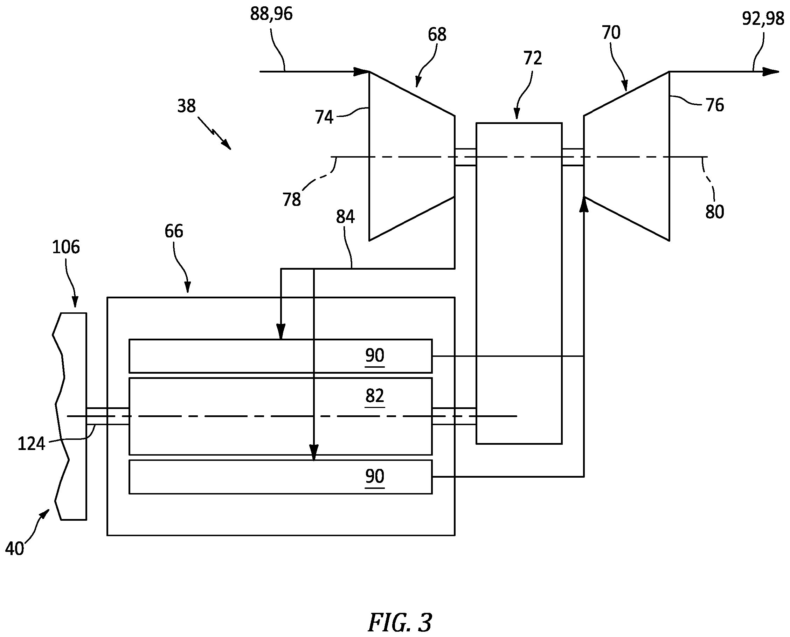

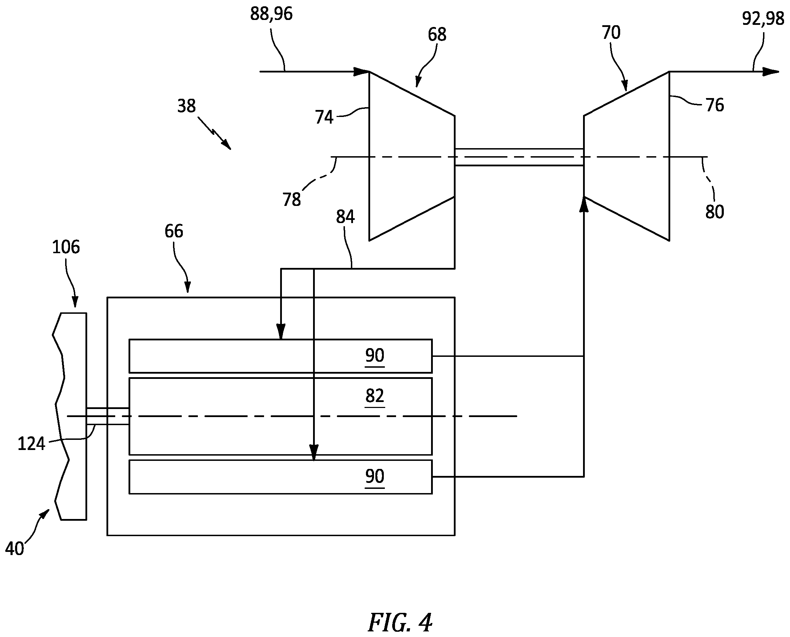

To facilitate aircraft operation at relatively high altitudes (e.g., above 10,000 ft (3048 m)), the intermittent combustion engine 66 may be configured as a forced induction intermittent combustion engine. The intermittent combustion engine 66, for example, may be turbo-compounded (e.g., see FIG. 3) and/or turbocharged (e.g., see FIG. 4). Of course, it is contemplated the intermittent combustion engine 66 may alternatively be naturally aspirated where the aircraft 20 is not designed for high altitude missions.

FIG. 3 illustrates the intermittent combustion engine 66 as a turbo-compounded intermittent combustion engine. The aircraft powerplant 38 of FIG. 3, in particular, includes the intermittent combustion engine 66, a compressor section 68, a turbine section 70 and a gearbox 72. The compressor section 68 includes a bladed compressor rotor 74 and the turbine section 70 includes a bladed turbine rotor 76. Each of these bladed rotors 74 and 76 includes a plurality of rotor blades arranged circumferentially around and connected to one or more respective rotor disks. The compressor rotor 74 is rotatable about a compressor axis 78. The turbine rotor 76 is rotatable about a turbine axis 80, which turbine axis 80 may be parallel (e.g., coaxial) with the compressor axis 78. The turbine rotor 76 is coupled to the compressor rotor 74 through the gearbox 72; however, the turbine rotor 76 may alternatively be coupled directly to the compressor rotor 74 by a common shaft. The turbine rotor 76 is further coupled to an internal rotating structure 82 of the intermittent combustion engine 66 through the gearbox 72.

The aircraft powerplant 38 of FIG. 3 (e.g., the turbo-compounded intermittent combustion engine of FIG. 3, the turbocharged intermittent combustion engine of FIG. 4) includes an internal powerplant flowpath 84. This powerplant flowpath 84 is discrete (e.g., separate, fluidly decoupled, etc.) from propulsor flowpaths 86 (e.g., 86A, 86B) through the respective flow ducts 50A, 50B of FIG. 2. The powerplant flowpath 84 of FIG. 3 extends from an inlet 88 to the aircraft powerplant 38, sequentially through the compressor section 68, one or more combustion zones 90 (e.g., cylinder chambers, etc.) within the intermittent combustion engine 66 and the turbine section 70, to an exhaust 92 from the aircraft powerplant 38. With this arrangement, the air delivered to the intermittent combustion engine 66 is compressed by the compressor rotor 74, and combustion products produced by combustion of the air-fuel mixture within the combustion zone(s) 90 drives rotation of the turbine rotor 76. The rotation of the turbine rotor 76 drives rotation of the compressor rotor 74 to facilitate the compression of the incoming air to the intermittent combustion engine 66. The rotation of the turbine rotor 76 may also assist driving rotation of the rotating structure 82.

Referring to FIG. 2, the aircraft powerplant 38 and its intermittent combustion engine 66 are arranged remote from the aircraft propulsors 36. The aircraft powerplant 38 is arranged inside of the airframe 22. More particularly, the aircraft powerplant 38 and its intermittent combustion engine 66 of FIG. 2 are arranged within the fuselage 26, for example at (e.g., on, adjacent or proximate) an aft, tail end 94 of the fuselage 26 proximate the vertical stabilizer 30 (see FIG. 1). Arranging the aircraft powerplant 38 and its intermittent combustion engine 66 within the airframe 22 takes advantage of available interior space within the aircraft 20 such that the aircraft powerplant 38 does not need to be located outside of the airframe 22 (e.g., like the aircraft propulsors 36) and thereby add to aircraft drag. Furthermore, arranging the aircraft powerplant 38 and its intermittent combustion engine 66 remote form the aircraft propulsors 36 may facilitate reducing overall sizes of the aircraft propulsors 36 and/or increase flow area of each duct 50 (e.g., compared to a turbofan engine with an integral inner core).

The powerplant inlet 88 is configured to draw fresh air from an exterior environment outside of the aircraft 20. The powerplant inlet 88 of FIG. 2, for example, includes / is formed by one or more inlet scoops 96 (e.g., 96A, 96B). Each of these inlet scoops 96 may be arranged along an exterior of the fuselage 26. Each of the inlet scoops 96 (and the powerplant inlet 88 more generally) thereby directs boundary layer air flowing along the fuselage 26 into the aircraft powerplant 38. Utilizing this boundary layer air may also improve aerodynamics of the fuselage 26.

The powerplant exhaust 92 is configured to direct the combustion products out of the aircraft powerplant 38 and out of the aircraft 20. The powerplant exhaust 92 of FIG. 2 includes an exhaust nozzle 98 along the exterior of the fuselage 26 at the aft, tail end 94 of the fuselage 26. Positioning the exhaust nozzle 98 at the aft, tail end 94 may reduce aircraft drag and may thereby improve aircraft powerplant efficiency and/or power. In some embodiments, the combustion products may be ducted directly from the turbine section 70 to the exhaust nozzle 98; e.g., where the exhausted combustion products are un-muffled. In other embodiments, at least one muffler 99 may be located between and fluidly coupled with the turbine section 70 and the exhaust nozzle 98. With this arrangement, the exhausted combustion products are muffled before being directed into the exterior environment outside of the aircraft 20.

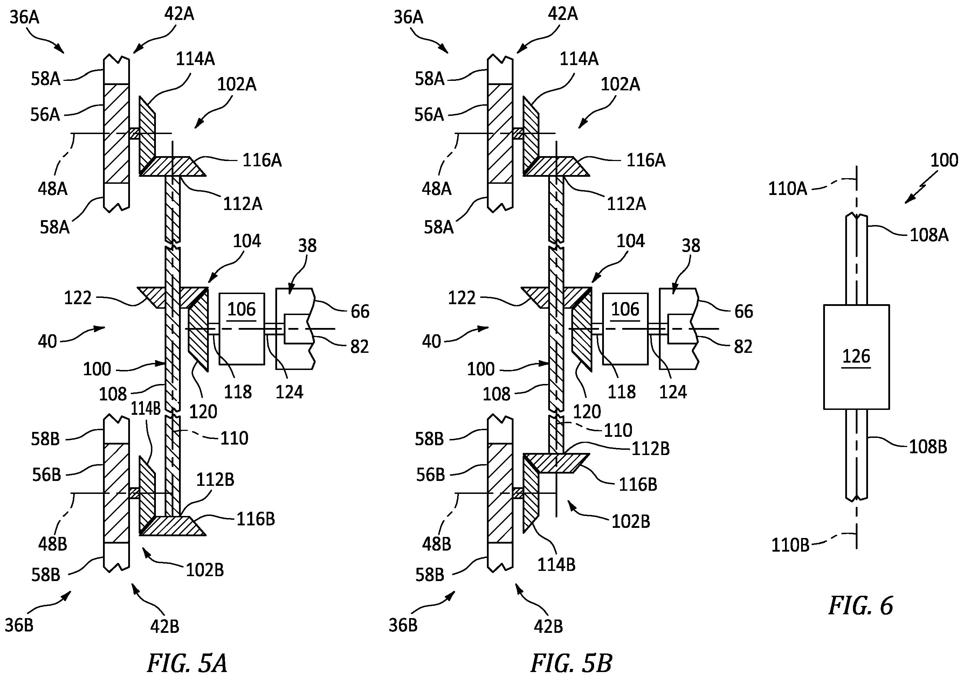

Referring to FIGS. 5A and 5B, the propulsor drivetrain 40 is configured to operatively couple the rotating structure 82 to the propulsor rotors 42. With this arrangement, rotation of the rotating structure 82, driven by combustion of the fuel-air mixture within the combustion zone(s) 90 (see FIGS. 3 and 4), may drive rotation of the propulsor rotors 42. The propulsor drivetrain 40 of FIG. 5A, 5B includes a drive structure 100, one or more propulsor couplings 102 (e.g., 102A, 102B), a transmission coupling 104 and a powerplant transmission 106.

The drive structure 100 of FIG. 5A, 5B is configured as a driveshaft 108. This driveshaft 108 extends axially along a drive axis 110 between and to opposing ends 112 (e.g., 112A and 112B) of the drive structure 100. The drive axis 110 of FIG. 5A, 5B is angularly offset from the propulsor axes 48. The drive axis 110, for example, may be perpendicular to the propulsor axes 48.

The first propulsor coupling 102A is configured to connect the drive structure 100 and its driveshaft 108 to the propulsor rotor 42A in the first aircraft propulsor 36A. The second propulsor coupling 102B is configured to connect the drive structure 100 and its driveshaft 108 to the propulsor rotor 42B in the second aircraft propulsor 36B. Each of these propulsor couplings 102A, 102B includes a propulsor bevel gear 114 (e.g., 114A, 114B) and a structure bevel gear 116 (e.g., 116A, 116B). The propulsor bevel gear 114A, 114B is mounted to or otherwise connected to and rotatable with the respective propulsor rotor 42. The structure bevel gear 116A, 116B is mounted to or otherwise connected to and rotatable with the drive structure 100 and its driveshaft 108 at a respective drive structure end 112A, 112B. This structure bevel gear 116A, 116B is engaged (e.g., meshed) with the respective propulsor bevel gear 114A, 114B.

Referring to FIG. 5A, the structure bevel gears 116 may be disposed to common lateral sides of the propulsor bevel gears 114. The first structure bevel gear 116A of FIG. 5A, for example, is disposed axially (along the drive axis 110) between the first propulsor bevel gear 114A and the transmission coupling 104, whereas the second propulsor bevel gear 114B of FIG. 5A is disposed axially (along the drive axis 110) between the second structure bevel gear 116B and the transmission coupling 104. With such an arrangement, the drive structure 100 and the structure bevel gears 116 may rotate the propulsor bevel gears 114 and, thus, the propulsor rotors 42 in a common direction (e.g., clockwise or counterclockwise direction) about their respective propulsor axes 48. The first propulsor rotor 42A and its blades 58A and the second propulsor rotor 42B and its blades 58B may thereby have a common (the same) configuration, which may reduce design and/or manufacturing time and costs. These propulsor rotors 42 of FIG. 5A may be referred to as co-rotating propulsor rotors.

Referring to FIG. 5B, the structure bevel gears 116 may be disposed to opposing lateral sides of the propulsor bevel gears 114. The first structure bevel gear 116A of FIG. 5B, for example, is disposed axially (along the drive axis 110) between the first propulsor bevel gear 114A and the transmission coupling 104, and the second structure bevel gear 116B of FIG. 5B is similarly disposed axially (along the drive axis 110) between the second propulsor bevel gear 114B and the transmission coupling 104. With such an arrangement, the drive structure 100 and the structure bevel gears 116 may rotate the propulsor bevel gears 114 and, thus, the propulsor rotors 42 in opposite directions. More particularly, the first propulsor bevel gear 114A and the corresponding first propulsor rotor 42A may rotate in a first direction (e.g., clockwise or counterclockwise direction) about the first propulsor axis 48A, and the second propulsor bevel gear 114B and the corresponding second propulsor rotor 42B may rotate in a second direction (e.g., counterclockwise or clockwise direction) about the second propulsor axis 48B that is opposite the first direction. The first propulsor rotor 42A and its blades 58A and the second propulsor rotor 42B and its blades 58B may thereby have different configurations. These propulsor rotors 42 of FIG. 5B may be referred to as counter-rotating propulsor rotors. Providing such counter-rotating propulsor rotors 42 may provide improved dynamic balancing of the aircraft 20 and/or provide partial sound attenuation for one another.

The transmission coupling 104 is configured to connect the drive structure 100 and its driveshaft 108 to an output 118 of the powerplant transmission 106. The transmission coupling 104 includes an output bevel gear 120 and a structure bevel gear 122. The output bevel gear 120 is mounted to or otherwise connected to and rotatable with the transmission output 118. The structure bevel gear 122 is mounted to or otherwise connected to and rotatable with the drive structure 100 and its driveshaft 108. The structure bevel gear 122, for example, may be mounted onto an intermediate (e.g., middle) portion of the driveshaft 108. The structure bevel gear 122 is engaged (e.g., meshed) with the output bevel gear 120.

The powerplant transmission 106 includes the transmission output 118 and a transmission input 124. This powerplant transmission 106 is configured such that a rotational speed of the transmission input 124 may be different than a rotational speed of the transmission output 118. The powerplant transmission 106 may also be configured such that a speed ratio between the transmission input speed and the transmission output speed may change. Thus, the powerplant transmission 106 may be a variable speed transmission. Examples of the variable speed transmission include, but are not limited to, a continuously variable transmission (CVT) and a variable speed drive (VSD).

The transmission input 124 is coupled to, is rotatable with and is rotationally driven by the powerplant rotating structure 82. The transmission output 118 is coupled to, is rotatable with and drives rotation of the propulsor rotors 42 through the other drivetrain elements 100, 102 and 104. With this arrangement, mechanical power output by the aircraft powerplant 38 is transferred to the aircraft propulsors 36 and their propulsor rotors 42 through the powerplant transmission 106. To facilitate high speed aircraft flight, the powerplant transmission 106 may change the speed ratio in a first direction; e.g., increase (or decrease) the speed ratio. To facilitate low speed aircraft flight, the powerplant transmission 106 may change the speed ratio in an opposite second direction; e.g., decrease (or increase) the speed ratio. More particularly, the powerplant transmission 106 may be operable to increase or decrease the propulsor rotor speed without significantly changing a rotational speed of the powerplant rotating structure 82. The aircraft powerplant 38 and its intermittent combustion engine 66 may thereby operate (e.g., throughout aircraft flight) at a certain rotational speed (or within a relatively small rotational speed band), while facilitating rotation of the propulsor rotors 42 within a relatively large rotational speed band. In other words, while the aircraft powerplant 38 and its intermittent combustion engine 66 may be substantially continuously operated at a certain (e.g., maximum) power and/or efficiency, the thrust produced by the aircraft propulsors 36 may be adjusted and variable. This thrust may also be adjusted by adjusting pitch of one or more or all of the rotor blades 58A, 58B and/or adjusting pitch of one or more or all of the stator vanes 60A, 60B. In such embodiments, the transmission 106 may (or may not) be configured as a fixed speed transmission; e.g., a non-variable speed transmission.

The powerplant transmission 106 of FIG. 2 is arranged remote from the aircraft propulsors 36. The powerplant transmission 106 is arranged with the aircraft powerplant 38 within the fuselage 26. Like the aircraft powerplant 38, arranging the powerplant transmission 106 within the aircraft fuselage 26 takes advantage of available space without increased aircraft drag.

The drive structure 100 is configured as a single, continuous driveshaft 108. In other embodiments, referring to FIG. 6, the drive structure 100 may include at least one compliant coupling 126 (or multiple compliant couplings); e.g., flex joints. The drive structure 100 of FIG. 6, for example, includes a plurality of driveshafts 108 (e.g., 108A, 108B); e.g., drive structure segments. The first driveshaft 108A is connected to the second driveshaft 108B through the compliant coupling 126. This compliant coupling 126 may facilitate axial movement between the driveshafts 108 along the drive axes 110 (e.g., 110A, 110B). The compliant coupling 126, for example, may be configured as or otherwise include a spline joint. The compliant coupling 126 may also or alternatively facilitate angular misalignment (e.g., slight pivoting) between the driveshafts 108. The compliant coupling 126, for example, may also or alternatively be configured as or otherwise include a universal joint. With such an arrangement, the drive structure 100 may accommodate slight flexing within the airframe 22 and/or between the airframe 22 and the aircraft propulsors 36.

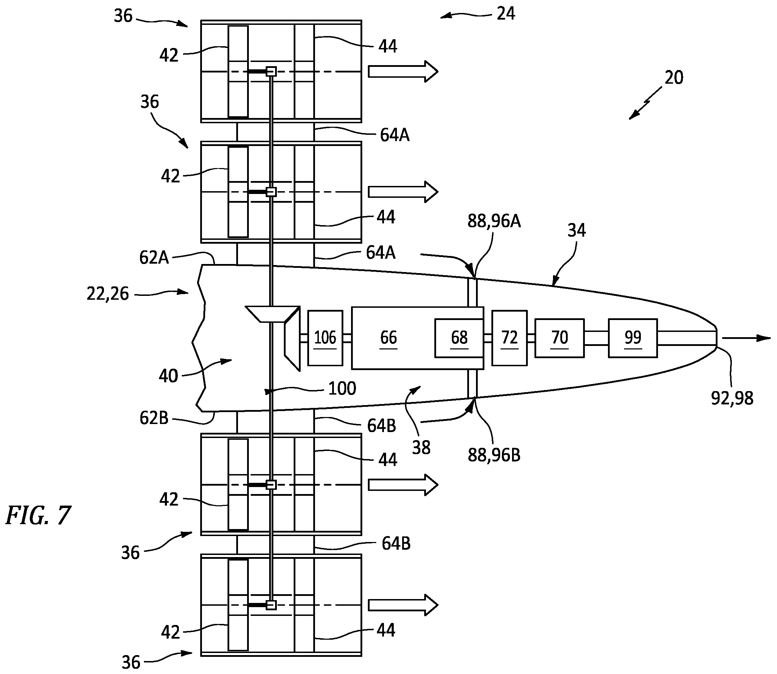

In some embodiments, referring to FIG. 2, the aircraft propulsion system 24 may be configured with a single aircraft propulsor 36 to each (or at least one) lateral side of the airframe 22 and its fuselage 26. With this arrangement, the aircraft powerplant 38 and its intermittent combustion engine 66, the powerplant transmission 106 as well as the airframe 22 and its fuselage 26 may be located laterally between the aircraft propulsors (e.g., 36A and 36B) and their respective propulsor axes 48. In other embodiments, referring to FIG. 7, the aircraft propulsion system 24 may be configured with multiple aircraft propulsors 36 to each (or at least one) lateral side of the airframe 22 and its fuselage 26. With this arrangement, a plurality of the aircraft propulsors 36 and their respective propulsor axes 48 may be located laterally to the first side 62A of the aircraft powerplant 38 and its intermittent combustion engine 66, the powerplant transmission 106 as well as the airframe 22 and its fuselage 26. Similarly, a plurality of the aircraft propulsors 36 and their respective propulsor axes 48 may also or alternatively be located laterally to the second side 62B of the aircraft powerplant 38 and its intermittent combustion engine 66, the powerplant transmission 106 as well as the airframe 22 and its fuselage 26.

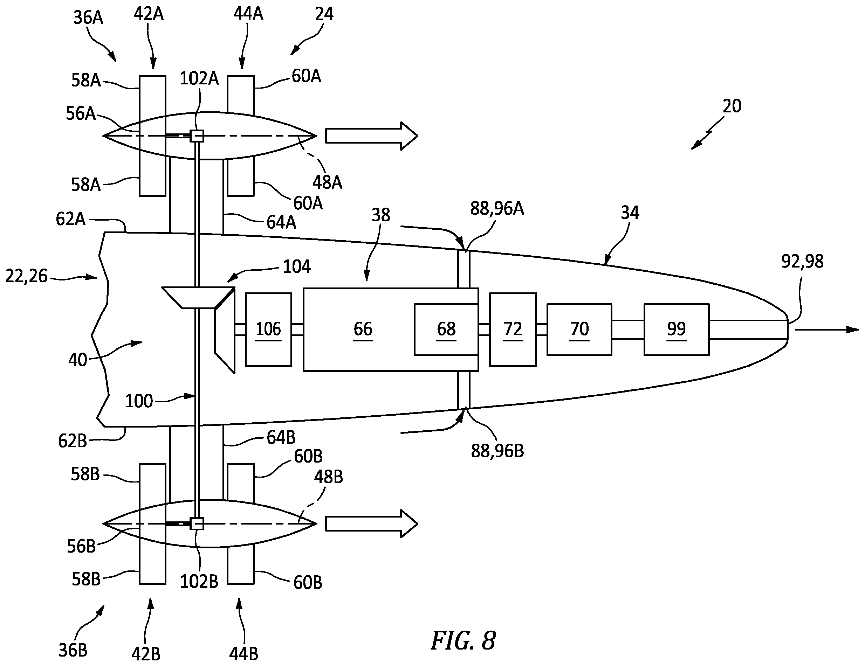

In some embodiments, referring to FIG. 2, the propulsor rotors 42 may be configured as ducted rotors; e.g., fan rotors. In other embodiments, referring to FIG. 8, the propulsor rotors 42 may alternatively be configured as open rotors (e.g., propellers) where, for example, the respective aircraft propulsor 36 is configured without the propulsor housing 46 of FIG. 2.

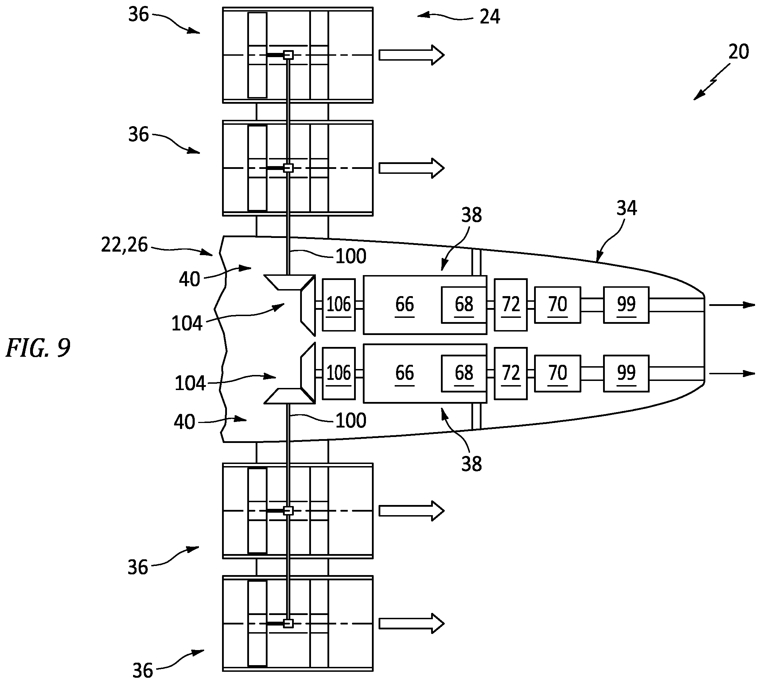

In some embodiments, referring to FIG. 2, the propulsion system 24 may include a single aircraft powerplant 38 powering all of the aircraft propulsors 36. In other embodiments, referring to FIG. 9, the propulsion system 24 may include multiple of the aircraft powerplants 38, where each aircraft powerplant 38 is paired with and powers its own aircraft propulsors 36. Such an arrangement may be provided to facilitate provision of a thrust differential laterally across the aircraft 20. For example, the aircraft propulsors 36 to the first side 62A may be driven to produce first thrust whereas the aircraft propulsors 36to the second side 62B may be driven to produce second thrust different than the first thrust. Alternatively, if the propulsive efficiency of each propulsor 36 is different, which can happen due to manufacturing differences, contamination and/or damage of one or more of the propulsors 36, then each powerplant 38 may be operated at slightly different speeds and/or the variable transmission 106 of each powerplant 38 may be operated at slightly different ratios such that the propulsor rotor 42 of one propulsor 36 may rotate at a slightly different speeds than the propulsor rotor 42 of another propulsor 36 in order to achieve common thrust from both propulsors 36.

In some embodiments, the transmission system shown in FIG. 9, in which each set of propulsors 36 may have its own drive shaft and bevel gear, can be combined with the single-engine concepts shown in FIGS. 2, 5A, 5B, 7 or 8 so that it is not necessary to have a continuous straight drive shaft between ends 112A and 112B; e.g., see FIG. 5A. This may facilitate the axis 48A and 48B of the propulsors 36 to be positioned higher than the axis of the gear 120, which may improve aircraft aerodynamics and/or increase the clearance between the propulsors 36 and the ground during landing or take-off. This may also facilitate use of more than two propulsors 36 arranged around a common powerplant, for example for an aircraft with three propulsors, such as one on each side and another on the top of the fuselage.

The propulsion system elements 38 and 106 are described above as being located in and mounted with the aft end region 34 of the fuselage 26. The present disclosure, however, is not limited to such an exemplary arrangement. For example, one or more or all of the propulsion system elements 38 and 106 may alternatively be located with and mounted to an intermediate or forward region of the fuselage 26.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure as defined by the appended claims.

## Claims

1. An aircraft system (20), comprising:
a first propulsor (36A) including a first propulsor rotor (42A) and a first vane array (44A);
a second propulsor (36B) including a second propulsor rotor (42B) and a second vane array (44B);
a drivetrain including a drive structure (100) and a transmission (106), an output (118) of the transmission (106) coupled to the first propulsor rotor (42A) and the second propulsor rotor (42B) through the drive structure (100), wherein the drive structure (100) is configured as a driveshaft (108);
an intermittent combustion engine (66) configured to drive rotation of the first propulsor rotor (42A) and the second propulsor rotor (42B) through the drivetrain; and
an aircraft fuselage (26) housing the intermittent combustion engine (66) and the transmission (106),
wherein the aircraft system further comprises:
an inlet (88) configured to direct boundary layer air flowing along the aircraft fuselage (26) to the intermittent combustion engine (66); and
an exhaust (92) located at an aft end of the aircraft fuselage (26), the exhaust (92) configured to direct combustion products generated by the intermittent combustion engine (66) out of the aircraft system (20).

2. The aircraft (20) system of claim 1, wherein:
the first propulsor rotor (42A) is rotatable about a first propulsor axis (48A);
the second propulsor rotor (42B) is rotatable about a second propulsor axis (48B); and
the drive structure (100) is rotatable about a drive axis (110) that is angularly offset from the first propulsor axis (48A) and the second propulsor axis (48B).

3. The aircraft system (20) of claim 1 or 2, wherein:
the first propulsor (36) further includes a first duct (50A), and the first propulsor rotor (42A) and the first vane array (44) are disposed within the first duct (50A); and
the second propulsor (36) further includes a second duct (50B), and the second propulsor rotor (42B) and the second vane array (44B) are disposed within the second duct (50B).

4. The aircraft system (20) of claim 1 or 2, wherein the first propulsor rotor (42A) comprises a first open rotor (42A), and the second propulsor rotor (42B) comprises a second open rotor (42B).

5. The aircraft system (20) of any preceding claim, wherein the first propulsor (36A) is laterally spaced from the second propulsor (36B) and:
the intermittent combustion engine (66) is located laterally between the first propulsor (36A) and the second propulsor (36B); or
the first propulsor (36A) and the second propulsor (36B) are located to a common lateral side of the intermittent combustion engine (66).

6. The aircraft system (20) of any preceding claim, further comprising a third propulsor (36) including a third propulsor rotor (42) and a third vane array (44), wherein:
the output (118) of the transmission (106) is further coupled to the third propulsor rotor (42) through the drive structure (100); and
the intermittent combustion engine (66) is further configured to drive rotation of the third propulsor rotor (42) through the drivetrain.

7. The aircraft system (20) of any preceding claim, wherein the drivetrain further includes
a first coupling (102A) connecting the drive structure (100) to the first propulsor rotor (42A), the first coupling (102A) including a first propulsor bevel gear (114A) and a first structure bevel gear (116A), the first propulsor bevel gear (114A) rotatable with the first propulsor rotor (42A), and the first structure bevel gear (116A) rotatable with the drive structure (100) and meshed with the first propulsor bevel gear (114A); and
a second coupling (102B) connecting the drive structure (100) to the second propulsor rotor (42B), the second coupling including a second propulsor bevel gear (114B) and a second structure bevel gear (116B), the second propulsor bevel gear (114B) rotatable with the second propulsor rotor (42B), and the second structure bevel gear (116B) rotatable with the drive structure (100) and meshed with the second propulsor bevel gear (114B).

8. The aircraft system (20) of any preceding claim, wherein the drivetrain is configured to rotate the first propulsor rotor (42A) and the second propulsor rotor (42B) in a common direction.

9. The aircraft system (20) of any preceding claim, wherein:
the drivetrain further includes a coupling (104) connecting the output (118) of the transmission (106) to the drive structure (100);
the coupling (104) includes a first bevel gear (120) and a second bevel gear (122) meshed with the first bevel gear (120);
the first bevel gear (120) is rotatable with the output (118) of the transmission (106); and
the second bevel gear (122) is rotatable with the drive structure (100).

10. The aircraft system (20) of any preceding claim, wherein:
the drive structure (100) includes a first driveshaft (108A), a second driveshaft (108B) and a compliant coupling (126) connecting the first driveshaft (108A) to the second driveshaft (108B); and/or
the transmission (106) comprises a variable speed transmission (106).

11. The aircraft system (20) of any preceding claim, wherein the intermittent combustion engine (66) comprises:
a rotary engine, a piston engine, a rotating detonation engine or a pulse detonation engine; and/or
a turbo-compounded intermittent combustion engine (66).

12. The aircraft system (20) of any preceding claim, wherein the first propulsor (36A) and the second propulsor (36B) are located outside of the aircraft fuselage (26).

## Patentansprüche

1. Flugzeugsystem (20), umfassend:
einen ersten Schuberzeuger (36A), der einen ersten Schuberzeugerrotor (42A) und eine erste Leitschaufelanordnung (44A) beinhaltet;
einen zweiten Schuberzeuger (36B), der einen zweiten Schuberzeugerrotor (42B) und eine zweite Leitschaufelanordnung (44B) beinhaltet;
einen Antriebsstrang, der eine Antriebsstruktur (100) und ein Getriebe (106) beinhaltet, wobei ein Ausgang (118) des Getriebes (106) über die Antriebsstruktur (100) mit dem ersten Schuberzeugerrotor (42A) und dem zweiten Schuberzeugerrotor (42B) gekoppelt ist, wobei die Antriebsstruktur (100) als Antriebswelle (108) konfiguriert ist;
einen intermittierenden Verbrennungsmotor (66), der dazu konfiguriert ist, die Rotation des ersten Schuberzeugerrotors (42A) und des zweiten Schuberzeugerrotors (42B) über den Antriebsstrang anzutreiben; und
einen Flugzeugrumpf (26), in dem der intermittierende Verbrennungsmotor (66) und das Getriebe (106) untergebracht sind,
wobei das Flugzeugsystem ferner Folgendes umfasst:
einen Einlass (88), der dazu konfiguriert ist, Grenzschichtluft, die entlang des Flugzeugrumpfs (26) strömt, zum intermittierenden Verbrennungsmotor (66) zu leiten; und
einen Auslass (92), der sich an einem hinteren Ende des Flugzeugrumpfs (26) befindet, wobei der Auslass (92) dazu konfiguriert ist, die vom intermittierenden Verbrennungsmotor (66) erzeugten Verbrennungsprodukte aus dem Flugzeugsystem (20) zu leiten.

2. Flugzeugsystem (20) nach Anspruch 1, wobei:
der erste Schuberzeugerrotor (42A) um eine erste Schuberzeugerachse (48A) drehbar ist;
der zweite Schuberzeugerrotor (42B) um eine zweite Schuberzeugerachse (48B) drehbar ist; und
die Antriebsstruktur (100) um eine Antriebsachse (110) drehbar ist, die von der ersten Schuberzeugerachse (48A) und der zweiten Schuberzeugerachse (48B) winkelversetzt ist.

3. Flugzeugsystem (20) nach Anspruch 1 oder 2, wobei:
der erste Schuberzeuger (36) ferner einen ersten Kanal (50A) beinhaltet und der erste Schuberzeugerrotor (42A) und die erste Leitschaufelanordnung (44) innerhalb des ersten Kanals (50A) angeordnet sind; und
der zweite Schuberzeuger (36) ferner einen zweiten Kanal (50B) beinhaltet und der zweite Schuberzeugerrotor (42B) und die zweite Leitschaufelanordnung (44B) innerhalb des zweiten Kanals (50B) angeordnet sind.

4. Flugzeugsystem (20) nach Anspruch 1 oder 2, wobei der erste Schuberzeugerrotor (42A) einen ersten offenen Rotor (42A) umfasst und der zweite Schuberzeugerrotor (42B) einen zweiten offenen Rotor (42B) umfasst.

5. Flugzeugsystem (20) nach einem der vorhergehenden Ansprüche, wobei der erste Schuberzeuger (36A) seitlich vom zweiten Schuberzeuger (36B) beabstandet ist und:
der intermittierende Verbrennungsmotor (66) sich seitlich zwischen dem ersten Schuberzeuger (36A) und dem zweiten Schuberzeuger (36B) befindet; oder
der erste Schuberzeuger (36A) und der zweite Schuberzeuger (36B) sich an einer gemeinsamen lateralen Seite des intermittierenden Verbrennungsmotors (66) befinden.

6. Flugzeugsystem (20) nach einem der vorhergehenden Ansprüche, ferner umfassend einen dritten Schuberzeuger (36), der einen dritten Schuberzeugerrotor (42) und eine dritte Leitschaufelanordnung (44) beinhaltet, wobei:
der Ausgang (118) des Getriebes (106) ferner über die Antriebsstruktur (100) mit dem dritten Schuberzeugerrotor (42) gekoppelt ist; und
der intermittierende Verbrennungsmotor (66) ferner dazu konfiguriert ist, die Rotation des dritten Schuberzeugerrotors (42) durch den Antriebsstrang anzutreiben.

7. Flugzeugsystem (20) nach einem der vorhergehenden Ansprüche, wobei der Antriebsstrang ferner Folgendes beinhaltet:
eine erste Kupplung (102A), die die Antriebsstruktur (100) mit dem ersten Schuberzeugerrotor (42A) verbindet, wobei die erste Kupplung (102A) ein erstes Schuberzeugerkegelrad (114A) und ein erstes Strukturkegelrad (116A) beinhaltet, wobei das erste Schuberzeugerkegelrad (114A) mit dem ersten Schuberzeugerrotor (42A) drehbar ist und das erste Strukturkegelrad (116A) mit der Antriebsstruktur (100) drehbar ist und mit dem ersten Schuberzeugerkegelrad (114A) kämmt; und
eine zweite Kupplung (102B), die die Antriebsstruktur (100) mit dem zweiten Schuberzeugerrotor (42B) verbindet, wobei die zweite Kupplung ein zweites Schuberzeugerkegelrad (114B) und ein zweites Strukturkegelrad (116B) beinhaltet, wobei das zweite Schuberzeugerkegelrad (114B) mit dem zweiten Schuberzeugerrotor (42B) drehbar ist und das zweite Strukturkegelrad (116B) mit der Antriebsstruktur (100) drehbar ist und mit dem zweiten Schuberzeugerkegelrad (114B) kämmt.

8. Flugzeugsystem (20) nach einem der vorhergehenden Ansprüche, wobei der Antriebsstrang dazu konfiguriert ist, den ersten Schuberzeugerrotor (42A) und den zweiten Schuberzeugerrotor (42B) in eine gemeinsame Richtung zu drehen.

9. Flugzeugsystem (20) nach einem der vorhergehenden Ansprüche, wobei:
der Antriebsstrang ferner eine Kupplung (104) beinhaltet, die den Ausgang (118) des Getriebes (106) mit der Antriebsstruktur (100) verbindet;
die Kupplung (104) ein erstes Kegelrad (120) und ein zweites Kegelrad (122), das mit dem ersten Kegelrad (120) kämmt, beinhaltet;
das erste Kegelrad (120) mit dem Ausgang (118) des Getriebes (106) drehbar ist; und
das zweite Kegelrad (122) mit der Antriebsstruktur (100) drehbar ist.

10. Flugzeugsystem (20) nach einem der vorhergehenden Ansprüche, wobei:
die Antriebsstruktur (100) eine erste Antriebswelle (108A), eine zweite Antriebswelle (108B) und eine nachgiebige Kupplung (126), die die erste Antriebswelle (108A) mit der zweiten Antriebswelle (108B) verbindet, beinhaltet; und/oder
das Getriebe (106) ein stufenloses Getriebe (106) umfasst.

11. Flugzeugsystem (20) nach einem der vorhergehenden Ansprüche, wobei der intermittierende Verbrennungsmotor (66) Folgendes umfasst:
einen Rotationsmotor, einen Kolbenmotor, einen rotierenden Detonationsmotor oder einen Impulsdetonationsmotor; und/oder einen intermittierenden Verbrennungsmotor (66) mit Turboaufladung.

12. Flugzeugsystem (20) nach einem der vorhergehenden Ansprüche, wobei sich der erste Schuberzeuger (36A) und der zweite Schuberzeuger (36B) außerhalb des Flugzeugrumpfs (26) befinden.

## Revendications

1. Système d'aéronef (20), comprenant :
un premier propulseur (36A) comportant un premier rotor de propulseur (42A) et un premier réseau d'aubes (44A) ;
un deuxième propulseur (36B) comportant un deuxième rotor de propulseur (42B) et un deuxième réseau d'aubes (44B) ;
une chaîne cinématique comportant une structure d'entraînement (100) et une transmission (106), une sortie (118) de la transmission (106) étant accouplée au premier rotor de propulseur (42A) et au deuxième rotor de propulseur (42B) par l'intermédiaire de la structure d'entraînement (100), dans lequel la structure d'entraînement (100) est configurée comme un arbre d'entraînement (108) ;
un moteur à combustion intermittente (66) configuré pour entraîner la rotation du premier rotor de propulseur (42A) et du deuxième rotor de propulseur (42B) par l'intermédiaire de la chaîne cinématique ; et
un fuselage d'aéronef (26) logeant le moteur à combustion intermittente (66) et la transmission (106),
dans lequel le système d'aéronef comprend également :
une entrée (88) configurée pour diriger l'air de la couche limite s'écoulant le long du fuselage d'aéronef (26) vers le moteur à combustion intermittente (66) ; et
un échappement (92) situé au niveau d'une extrémité arrière du fuselage d'aéronef (26), l'échappement (92) étant configuré pour diriger les produits de combustion générés par le moteur à combustion intermittente (66) hors du système d'aéronef (20).

2. Système d'aéronef (20) selon la revendication 1, dans lequel :
le premier rotor de propulseur (42A) peut tourner autour d'un premier axe de propulseur (48A) ;
le deuxième rotor de propulseur (42B) peut tourner autour d'un deuxième axe de propulseur (48B) ; et
la structure d'entraînement (100) peut tourner autour d'un axe d'entraînement (110) qui est décalé de manière angulaire par rapport au premier axe de propulseur (48A) et au deuxième axe de propulseur (48B).

3. Système d'aéronef (20) selon la revendication 1 ou 2, dans lequel :
le premier propulseur (36) comporte également un premier conduit (50A), et le premier rotor de propulseur (42A) et le premier réseau d'aubes (44) sont disposés à l'intérieur du premier conduit (50A) ; et
le deuxième propulseur (36) comporte également un deuxième conduit (50B), et le deuxième rotor de propulseur (42B) et le deuxième réseau d'aubes (44B) sont disposés à l'intérieur du deuxième conduit (50B).

4. Système d'aéronef (20) selon la revendication 1 ou 2, dans lequel le premier rotor de propulseur (42A) comprend un premier rotor ouvert (42A), et le deuxième rotor de propulseur (42B) comprend un deuxième rotor ouvert (42B).

5. Système d'aéronef (20) selon une quelconque revendication précédente, dans lequel le premier propulseur (36A) est espacé latéralement du deuxième propulseur (36B) et :
le moteur à combustion intermittente (66) est situé latéralement entre le premier propulseur (36A) et le deuxième propulseur (36B) ; ou
le premier propulseur (36A) et le deuxième propulseur (36B) sont situés sur un côté latéral commun du moteur à combustion intermittente (66).

6. Système d'aéronef (20) selon une quelconque revendication précédente, comprenant également un troisième propulseur (36) comprenant un troisième rotor de propulseur (42) et un troisième réseau d'aubes (44), dans lequel :
la sortie (118) de la transmission (106) est également accouplée au troisième rotor de propulseur (42) par l'intermédiaire de la structure d'entraînement (100) ; et
le moteur à combustion intermittente (66) est également configuré pour entraîner la rotation du troisième rotor de propulseur (42) par l'intermédiaire de la chaîne cinématique.

7. Système d'aéronef (20) selon une quelconque revendication précédente, dans lequel la chaîne cinématique comprend également un premier accouplement (102A) reliant la structure d'entraînement (100) au premier rotor de propulseur (42A), le premier accouplement (102A) comportant un premier engrenage conique de propulseur (114A) et un premier engrenage conique de structure (116A), le premier engrenage conique de propulseur (114A) pouvant tourner avec le premier rotor de propulseur (42A), et le premier engrenage conique de structure (116A) pouvant tourner avec la structure d'entraînement (100) et engrené avec le premier engrenage conique de propulseur (114A) ; et
un deuxième accouplement (102B) reliant la structure d'entraînement (100) au deuxième rotor de propulseur (42B), le deuxième accouplement comportant un deuxième engrenage conique de propulseur (114B) et un deuxième engrenage conique de structure (116B), le deuxième engrenage conique de propulseur (114B) pouvant tourner avec le deuxième rotor de propulseur (42B), et le deuxième engrenage conique de structure (116B) pouvant tourner avec la structure d'entraînement (100) et engrené avec le deuxième engrenage conique de propulseur (114B).

8. Système d'aéronef (20) selon une quelconque revendication précédente, dans lequel la chaîne cinématique est configurée pour faire tourner le premier rotor de propulseur (42A) et le second rotor de propulseur (42B) dans une direction commune.

9. Système d'aéronef (20) selon une quelconque revendication précédente, dans lequel :
la chaîne cinématique comporte également un accouplement (104) reliant la sortie (118) de la transmission (106) à la structure d'entraînement (100) ;
l'accouplement (104) comporte un premier engrenage conique (120) et un deuxième engrenage conique (122) engrené avec le premier engrenage conique (120) ;
le premier engrenage conique (120) peut tourner avec la sortie (118) de la transmission (106) ; et
le deuxième engrenage conique (122) peut tourner avec la structure d'entraînement (100).

10. Système d'aéronef (20) selon une quelconque revendication précédente, dans lequel :
la structure d'entraînement (100) comporte un premier arbre d'entraînement (108A), un deuxième arbre d'entraînement (108B) et un accouplement souple (126) reliant le premier arbre d'entraînement (108A) au deuxième arbre d'entraînement (108B) ; et/ou
la transmission (106) comprend une transmission à vitesse variable (106).

11. Système d'aéronef (20) selon une quelconque revendication précédente, dans lequel le moteur à combustion intermittente (66) comprend :
un moteur rotatif, un moteur à piston, un moteur à détonation rotative ou un moteur à détonation pulsée ; et/ou
un moteur à combustion intermittent turbocompressé (66).

12. Système d'aéronef (20) selon une quelconque revendication précédente, dans lequel le premier propulseur (36A) et le deuxième propulseur (36B) sont situés à l'extérieur du fuselage d'aéronef (26).
